# EUROPÄISCHE PATENTSCHRIFT

(11) **EP 0 867 080 B1**
(45) Veröffentlichungstag und Bekanntmachung des Hinweises auf die Patenterteilung: **19.04.2000**
(21) Anmeldenummer: 96946008.8
(22) Anmeldetag: 22.11.1996
(51) Int. Cl.: H04B 7/06

(54) **SENDEEINRICHTUNGEN ZUR ÜBERTRAGUNG VON FUNKSIGNALEN EINER BESTIMMTEN SENDEFREQUENZ NACH EINEM VORGEGEBENEN ÜBERTRAGUNGSZEITPROTOKOLL**
EMITTER SYSTEMS FOR THE TRANSMISSION OF RADIO SIGNALS OF A GIVEN EMISSION FREQUENCY ACCORDING TO A PREDEFINED TRANSMISSION TIME PROTOCOL
DISPOSITIFS D'EMISSION POUR LA TRANSMISSION DE SIGNAUX RADIO D'UNE FREQUENCE D'EMISSION DETERMINEE SELON UN PROTOCOLE TEMPOREL DE TRANSMISSION PREDEFINI

(30) Priorität: 13.12.1995 DE 19546599
(43) Veröffentlichungstag der Anmeldung: 30.09.1998
(73) Patentinhaber: SIEMENS AKTIENGESELLSCHAFT, 80333 München (DE)
(72) Erfinder: SCHREIB, Franz, D-81475 München (DE); FÄRBER, Michael, D-82515 Wolfratshausen (DE)
(86) Internationale Anmeldenummer: DE9602249
(87) Internationale Veröffentlichungsnummer: WO9722187

(56) Entgegenhaltungen:
- EP-A- 0 479 744
- WO-A-95/30290
- WO-A-95/32558
- DE-A- 4 021 636
- GB-A- 2 221 820
- PATENT ABSTRACTS OF JAPAN vol. 096, no. 004, 30.April 1996 & JP 07 321547 A (MATSUSHITA ELECTRIC IND CO LTD), 8.Dezember 1995

## Beschreibung

Die Erfindung betrifft eine Sendeeinrichtung mit einer Sendesignalquelle und einer Sendeantenne zur Abstrahlung von Funksignalen einer bestimmten Sendefrequenz nach einem vorgegebenen Zeitprotokoll.

In Funksystemen, wie z.B. dem GSM-Mobilfunksystem, dienen Sendeeinrichtungen zur Abstrahlung von Funksignalen als elektromagnetische Wellen, die von Empfangseinrichtungen aufgenommen und ausgewertet werden. Zwischen Sendeeinrichtung und Empfangseinrichtung bestehen somit keine leitungsgebundene Verbindungen. In der Sendeeinrichtung werden die Sendesignale in einer Sendesignalquelle erzeugt, diese Sendesignale sind dabei hochfrequent. Über Kabelverbindungen und diverse weitere Einrichtungen wie Vorverstärker, etc. werden die Sendesignale einer Sendeantenne zugeführt, die letztendlich die Funksignale abstrahlt.

Eine Sendeantenne weist dabei eine bestimmte Abstrahlungscharakteristik auf. Unter reellen Einsatzbedingungen für Funksysteme sind die Funksignale verschiedenartigsten Störungen ausgesetzt und erreichen die Empfangseinrichtung auf sehr unterschiedlichen Ausbreitungswegen. Außer einem direkten Ausbreitungsweg können die Funksignale auch an Hindernissen wie Bergen, Bäumen, Gebäuden u.ä. reflektiert oder gebeugt werden. In der Empfangseinrichtung überlagern sich die Funksignale der verschiedenen Ausbreitungswege. Dies führt zu Auslöschungseffekten, die dem Empfang der Funksignale mitunter stark beeinträchtigen, siehe dazu J.D.Parsons, "The Mobile Radio Propagation Channel", Pentech Press Publishers, London, 1992, S.108-113.

Um in diese Auslöschungseffekte, auch Fadingeffekte genannt, zu umgehen, sind verschiedene Methoden bekannt. Mit mehreren Empfangsantennen in der Empfangseinrichtung kann z.B. der Auslöschungseffekt durch Antenna Diversity reduziert werden. Weiterhin ist es aus dem GSM-Mobilfunksystem bekannt über Frequency Hopping, d.h. die Sendefrequenz für die Sendesignale zu ändern (M. Mouly, M.B.Pautet, "The GSM System for Mobile Communications", 1992, u.a. S.218-223), eine Verbesserung der Empfangsbedingungen zu bewirken. Letztere Methode weist allerdings den Nachteil auf, daß sie eine aufwendige Implementierung erfordert. Auch kann dies nicht angewendet werden, wenn im GSM-Mobilfunksystem nur eine Trägerfrequenz zur Verfügung steht, wie es vor allem bei einfachen und preiswerten Basisstationen der Fall ist.

Aus EP-A-0 479 744, WO-A-95/32558 und GB-A-2 221 820 sind Kommunikationssysteme bekannt, bei denen zwischen unterschiedlichen Antennen während einer Verbindung geschalten wird. Diese Antennen können auch eine unterschiedliche Polarisationen aufweisen. In WO-A-95/32558 ist zudem das Umschalten mit einem Zeitprotokoll der Übertragung synchronisiert.

Weiterhin kann das Problem der starken Signalpegelschwankungen beim Empfänger dadurch ausgeglichen werden, daß die Sendeleistung erhöht wird. Dies hat jedoch den Nachteil, daß auf benachbarten Funkstrecken mit erhöhten Störungen gerechnet werden muß.

Der Erfindung liegt somit die Aufgabe zugrunde, auch dann eine Reduzierung des Auslöschungseffektes in Funkstrecken zwischen Sendeeinrichtungen und Empfangseinrichtungen in Funksystemen zu bewirken, wenn nur eine Sendefrequenz zur Verfügung steht. Die Aufgabe wird durch die Sendeeinrichtung ausgehend vom Oberbegriff des Patentanspruchs 1 durch dessen kennzeichnende Merkmale gelöst.

Die Grundidee der Erfindung liegt der Nutzung einer weiteren Dimension der Veränderung des Abstrahlungsdiagramms der Sendeeinrichtung. Auf der Sendeseite der Funkstrecke wird durch einen zeitgesteuerten Umschalter die Abstrahlungsrichtung der Sendeeinrichtung so geschalten, daß für eine zu übertragende Informationssequenz zumindest zwei verschiedene dekorrelierte Funksignale, die unterschiedliche Informationen enthalten, mit unterschiedlicher Abstrahlungsrichtung nacheinander, z.B. in aufeinanderfolgenden Zeitlagen einer Verkehrsbeziehung, entsprechend einem Zeitprotokoll der Nachrichtenübertragung der Sendeeinrichtung entstehen. Dabei wird die Sendefrequenz nicht verändert.

Neben einer weiterhin möglichen Dekorrelation der Kanalbedingung durch Frequenzänderung kann erfindungsgemäß eine zusätzliche Dekorrelation der Kanalbedingung durch die unterschiedliche Abstrahlungsrichtung erreicht werden. Liegt in der Sendeeinrichtung nicht die Möglichkeit vor, eine Frequenzänderung durchzuführen, dann wird so erstmalig die Möglichkeit der Dekorrelierung von Funksignalen auf der Sendeseite erreicht.

Ist das Kommunikationssystem, in dessen Rahmen die Sendeeinrichtung eingesetzt wird, ein im Zeitlagenmultiplex betriebenes Kommunikationssystem so wird der Umschalter vorteilhafterweise von einem Zeitgeber gesteuert, der nach einer vorgebbaren Sequenz zeitlagengetreu die Abstrahlungsrichtung umschaltet. Beispiele für solche im zeitlagenmultiplex betriebene Kommunikationssysteme sind das GSM-Mobilfunksystem und das DECT-Schnurlostelefoniesystem.

Um die Abstrahlungscharakteristik der Sendeeinrichtung ohne Frequenzänderung zu beeinflussen, besteht die erfindungsgemäß Möglichkeit, die Abstrahlungsrichtung der Sendeantenne zu verändern und ggf. zusätzlich eine Abstrahlung in verschiedenen Polarisationsebenen zu realisieren.

Ermöglicht die eine Sendeantenne die Abstrahlung in verschiedenen Polarisationsebenen, dann schaltet der Umschalter die Sendesignale derart auf die Sendeantenne, daß zwischen den Polarisationsebenen umgeschaltet wird. Zur Änderung der Abstrahlungsrichtung ist die Sendeantenne vorteilhafterweise als phasengesteuerte Gruppenantenne ausgeprägt, so daß der Umschalter die Phasensteuerung der Gruppenantenne so vornimmt, daß zwischen zumindest zwei verschiedenen Abstrahlungsrichtungen umgeschaltet wird.

Die Sendeeinrichtung ist entsprechend einer weiteren Ausgestaltung der Erfindung als Mobilstation oder als Basisstation innerhalb eines GSM-Mobilfunknetzes ausgebildet. Das Zeitprotokoll in der Sendeeinrichtung unterscheidet also zwischen Zeitlagen innerhalb eines Rahmens, wobei Rahmen wiederum zu Makrorahmen zusammengefaßt werden können. Der Umschalter schaltet somit mit jeder Zeitlage, jedem Rahmen oder Makrorahmen die Abstrahlungsrichtung der Sendeeinrichtung zeitlagengetreu um. Es kommt somit zu keinerlei Störungen der Nachrichtenübertragung.

Die Umschaltung, ggf. auch zusätzlich zwischen verschiedenen Sendeantennen, erfolgt nach einer frei vorgebbaren Sequenz, d.h. alle vorhandenen Sendeantennen können nacheinander oder nach einem anderen vorteilhaften Muster angesteuert werden. Dabei können verschiedene Methoden angewendet werden, um eine statistische Dekorrelation der Funksignale zu erzielen. Vorteilhafterweise wird die Sendeeinrichtung für den Fall von mehreren Sendeantennen so ausgestaltet, daß die Sendeantennen so zueinander positioniert werden, daß in vorbestimmten Bereichen des Funkbereiches der Sendeeinrichtung die Funksignale der verschiedenen Abstrahlungsrichtungen eine Mindest-dekorrelation aufweisen. Besondere Problembereiche im Funkbereich z.B. Tunnelinnenräume o.ä. können damit bei der Positionierung der Sendeantennen besonders berücksichtigt werden. Die Wirksamkeit der erfindungsgemäßen Sendeeinrichtung kann bezüglich der Ausgleichung der Schwankungen des Sendepegels bei der Empfangseinrichtung auf diese Problembereiche konzentriert werden.

Die erfindungsgemäße Sendeeinrichtung soll nun anhand von zeichnerischen Darstellungen näher erläutert werden. Dabei zeigt
- FIG 1: eine GSM-mobilfunksystemtypische Einsatzumgebung, die durch Mehrwegeausbreitung gekennzeichnet ist,
- FIG 2: eine Basisstation mit mehreren Sendeantennen,
- FIG 3: eine Basisstation mit einer Gruppenantenne zum Umschalten der Polarisationserrichtung bzw. der Ausbreitungsrichtung,
- FIG 4: ein Zeitdiagramm der Ausnutzung von Zeitlagen zur Nachrichtenübertagung ohne Frequenz-Hopping und
- FIG 5: Zeitdiagramme des Zeitprotokolls des Umschalters

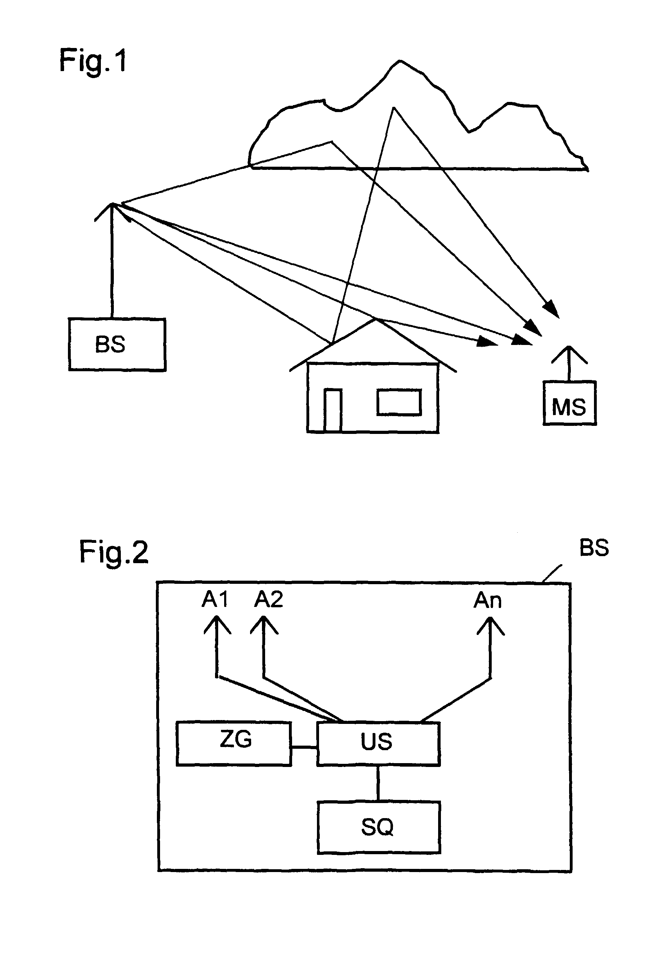

FIG 1 verdeutlicht die Einsatzumgebung eines Funksystems, z.B. eines GSM-Mobilfunksystems (GSM, DCS1800, PCS1900). Eine Basisstation BS als Sendeeinrichtung soll zur Nachrichtenübertragung zu einer Mobilstation MS Funksignale abstrahlen, die dann von der Mobilstation MS aufgenommen werden. Dazu wird zwischen Basisstation BS und Mobilstation MS bis zum Ende der Nachrichtenübertragung eine Verkehrsbeziehung aufgebaut, für im Zeitmultiplex betriebene Funksysteme wird allerdings nur während bestimmter Zeitlagen für diese Verkehrsbeziehung tatsächlich Informationen übertragen. Neben der Basistation BS und der Mobilstation MS sind jedoch noch weitere aktive oder passive Komponenten im Funkbereich der Basisstation BS zu beachten. Diese sind skizzenhaft als Haus bzw. Berg angegeben. Die Funksignale ausgehend von der Basisstation BS erreichen die Mobilstation MS über verschiedene Ausbreitungswege. Dies ist der klassische Fall der Mehrwegeausbreitung der durch Einfach- oder Mehrfachreflektionen, Beugungen aber auch den direkten Ausbreitungsweg entsteht.

FIG 2 zeigt eine Basisstation BS, die zur Reduzierung der Auslöschungseffekte, die bei der Mobilstation MS durch die Überlagerung der Funksignale der verschiedenen Ausbreitungswege entstehen, durch den Einsatz von mehreren Sendeantennen A1..n. Der Funktionsteil Sendeeinrichtung der Basisstation BS umfaßt erfindungsgemäß eine Sendesignalquelle SQ, die mit einem Umschalter US verbunden ist. Der Umschalter US wird durch einen Zeitgeber ZG entsprechend dem Zeitprotokoll des GSM-Mobilfunksystems gesteuert. Der Umschalter US schaltet die Sendesignale, die in der Sendesignalquelle SQ erzeugt werden auf die verschiedenen Sendeantennen A1..n. Dies ist aus WO 95/32558 bekannt. Jede Sendeantenne A1..n hat dabei ein individuelles Abstrahlungsdiagramm, das sich von den übrigen unterscheidet. Für jedes dieser Abstrahlungsdiagramme (Abstrahlungsrichtungen) entsteht somit ein eigentümliches Szenarium bezüglich der Mehrwegeausbreitung. Dies bringt den Vorteil mit sich, daß durch Umschaltung zwischen zwei Abstrahlungscharakteristiken die Auslöschungseffekte bei der Mobilstation MS verändert und ggf. verringert werden können. Erfolgt die Umschaltung zwischen den Sendeantennen A1..n in der Basisstation BS unabhängig von Rückmeldungen der Mobilstation MS, so kann trotzdem eine statistische Verbesserung erreicht werden. In die Basisstation BS kann jedoch auch gezielt, abhängig vom Empfangsergebnis in der Mobilstation MS, die Umschaltung der Abstrahlungscharakteristik genutzt werden, um die Empfangsergebnisse zu verbessern.

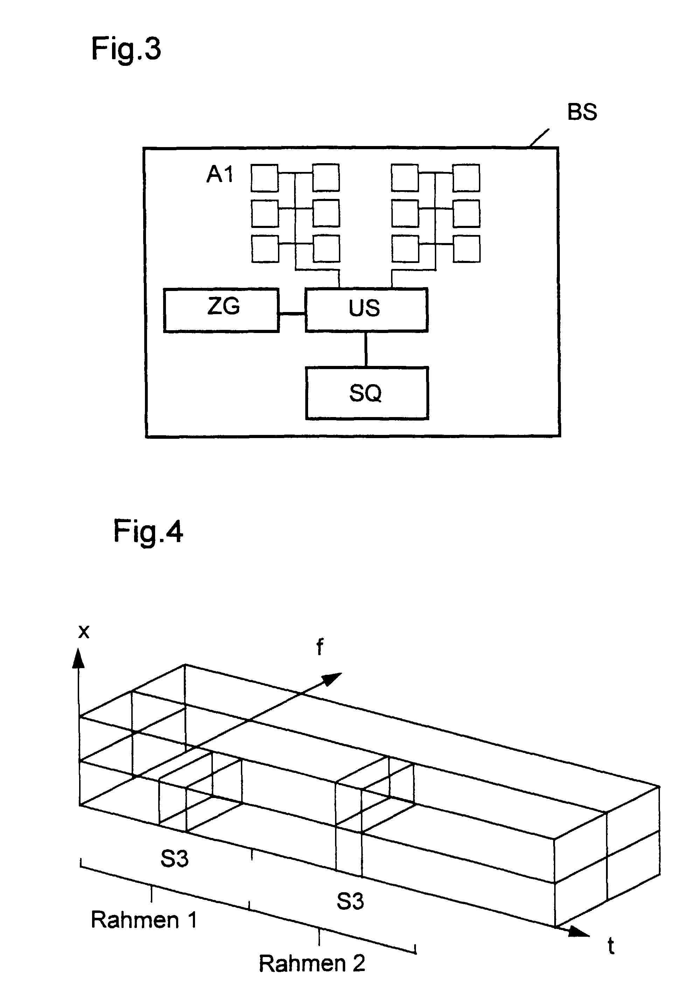

FIG 3 zeigt eine Basisstation BS, die wiederum eine Sendesignalquelle SQ einen Umschalter US und einen Zeitgeber ZG, wie zuvor geschildert, aufweist. Der Umschalter US ist jedoch nicht mit mehreren Sendeantennen A1..n, sondern nur mit einer Sendeantenne A1, die als Gruppenantenne ausgebildet ist verbunden. Die Einzelelemente der Gruppenantenne A1 können nach bekannten Methoden der Phasenansteuerung so durch den Umschalter US gesteuert werden, daß sich die Abstrahlungscharakteristik der Sendeantenne A1 durch Änderung der Abstrahlungsrichtung und ggf. zusätzlich durch Änderung der Polarisation der Funksignale modifiziert. Damit ergibt sich ein neues Szenanrium für die Ausbreitungswege der Funksignale. Auch bei der Basisstation BS nach FIG 3 wird die Dekorrelation der Funksignale der verschiedenen Funksignale ohne Frequenzänderung erreicht.

Die Justierung der Abstrahlungsdiagramme kann vorteilhafterweise so geschehen, daß in bestimmten als kritisch bekannten Bereichen des Funkbereiches der Basisstationen BS eine besonders hohe Dekorrelation realisiert wird. Diese Dekorrelation liegt über einem bestimmten Mindestwert. Diese spezielle Justierung ist jedoch nicht Bedingung, da auch über eine rein statistische zufällige Unterscheidung der Abstrahlungsrichtungen eine statistische Reduzierung der Auslöschungseffekte bei der Mobilstation MS erreicht werden kann.

FIG 4 verdeutlicht an einem räumlichen Diagramm mit den Achsen Zeit t, Frequenz f und x für die zusätzliche Dimension:
- Abstrahlungsrichtung, und ggf.
- zusätzliche Polarisationsebenen,
- zusätzliche Sendeantenne die Möglichkeiten der Nachrichtenübertragung über eine Funkstrecke.

Die Nachrichtenübertragung erfolgt im GSM-Mobilfunknetz im Zeitmultiplex und falls mehrere Trägerfrequenzen zur Verfügung stehen auch im Frequenzmultiplex. Einer Verkehrsbeziehung zwischen Basisstation BS und Mobilstation MS ist eine Zeitlage, beispielhaft Zeitlage S3, zugeordnet. In jedem Rahmen (Rahmen 1, Rahmen 2,..) wird diese Zeitlage S3 zur Nachrichtenübertragung zwischen Basisstation BS und Mobilstation MS benutzt. Erfindungsgemäß wird jedoch die Dimension Frequenz f nicht zur Erzielung einer Dekorrelation der Kanalbedingungen benutzt, sondern die zuvor genannte Dimension x.

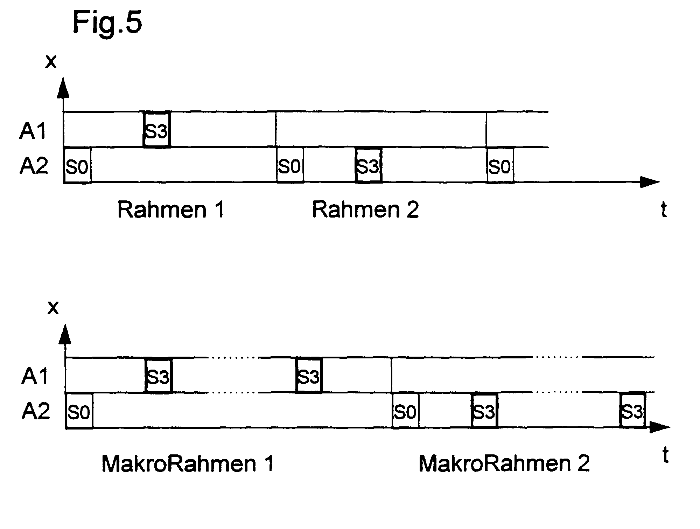

In FIG 5 wird verdeutlicht, daß die Umschaltung der Sendesignale z.B. von einer Sendeantenne A1 zu einer Sendeantenne A2 für einen Zeitschlitz S3 von Rahmen zu Rahmen geschehen kann oder auch innerhalb eines Makrorahmens konstant bleibt jedoch von Makrorahmen 1 zu Makrorahmen 2 umgeschaltet wird. Weiterhin ist zu beachten, daß die Umschaltung für verschiedene Verkehrsbeziehungen, die eine der Zeitlagen S0..7 belegen, auch von Zeitschlitz zu Zeitschlitz erfolgen kann.

Die erfindungsgemäße Sendeeinrichtung BS, MS ermöglicht es auch bei nur einer zur Verfügung stehenden Sendefrequenz die Kanalbedindungen für Funksignale in zu einer Verkehrsbeziehung gehörenden Zeitlagen zu dekorrelieren, somit ergeben sich z.B. in GSM-Mobilfunksystemen verbesserte Gesprächsbedingungen. Steht nur ein einziger Träger, d.h. eine Sendefrequenz in der Sendeeinrichtung BS, MS zur Verfügung so eröffnet die Dimension x die einzige Möglichkeit die Kanalbedingungen in aufeinanderfolgenden Zeitlagen zu dekorrelieren.

Die erfindungsgemäße Ausgestaltung, die Kanalbedingungen über die in der Dimension x angegebenen Varianten zu dekorrelieren kann selbstverständlich auch mit dem Frequency Hopping kombiiert werden. Damit ergibt sich eine weitere Verbesserung der Empfangsbedingungen, da z.B. bei zwei Antennen und zwei Trägerrequenzen vier dekorrelierte Kanalbedingungen vorliegen.

## Patentansprüche

1. Sendeeinrichtung (BS, MS) für ein Mobilfunknetz mit einer Sendesignalquelle (SQ) und einer Sendeantenne (A1) zur Übertragung von Informationssequenzen, die nach einem vorgegebenen Zeitprotokoll aufgeteilt werden und in mindestens zwei, unterschiedliche Informationen enthaltenden Funksignalen einer bestimmten Sendefrequenz abgestrahlt werden, mit einem zeitgesteuerten Umschalter (US), der die Abstrahlungscharakteristik der Sendeeinrichtung (BS, MS) schaltet, so daß ohne Veränderung der Sendefrequenz die aufeinanderfolgenden Funksignale einer Verkehrsbeziehung dekorreliert sind, wobei ein Zeitprotokoll des zeitgesteuerten Umschalters (US) mit dem Zeitprotokoll der Nachrichtenübertragung der Sendeeinrichtung (BS, MS) synchronisiert ist, wobei das Umschalten der Abstrahlungscharakteristik unter Benutzung einer Sendeantenne (A1) durchführbar ist,
**dadurch gekennzeichnet,**
daß die Abstrahlungsrichtung veränderbar ist.

2. Sendeeinrichtung (BS, MS) nach Anspruch 1,
**dadurch gekennzeichnet,**
daß die Funksignale in der im zeitlagenmultiplex betriebenen Sendeeinrichtung (BS, MS) gebildet und abgestrahlt werden und
der Umschalter (US) von einem Zeitgeber (ZG) gesteuert wird, so daß der Umschalter (US) die Abstrahlungsrichtung entsprechend einer vorgebbaren Sequenz zeitlagengetreu umschaltet.

3. Sendeeinrichtung (BS,MS) nach Anspruch 1 oder 2,
**dadurch gekennzeichnet,**
daß die Sendeantenne (A1) derart ausgebildet ist, daß deren Abstrahlung in verschiedenen Polarisationsebenen erfolgen kann, und
daß der Umschalter (US) die Sendesignale derart der Sendeantenne (A1) zuführt, daß zwischen den Polarisationsebenen durch geeignete Speisung der Sendeantenne (A1) umgeschaltet wird.

4. Sendeeinrichtung (BS,MS) nach einem der Ansprüche 1 bis 3,
**dadurch gekennzeichnet,**
daß die Sendeantenne (A1) als phasengesteuerte Gruppenantenne ausgeprägt ist und der Umschalter (US) die Phasensteuerung zwischen zumindest zwei verschiedenen Abstrahlungsrichtungen umschaltet bzw. steuert.

5. Sendeeinrichtung (BS,MS) nach einem der Ansprüche 1 bis 4, wobei die Sendeeinrichtung (BS,MS) als Basisstation (BS) oder Mobilstation (MS) in einem GSM- oder GSM-ähnlichen Mobilfunksystem ausgebildet ist und
wobei der Umschalter (US) mit jeder Zeitlage, jedem Rahmen oder jedem Makrorahmen die Abstrahlungsrichtung GSM-gemäß umschaltet.

6. Sendeeinrichtung (BS,MS) nach einem der Ansprüche 1 bis 5, wobei mehrere Sendeantennen (A1..n) zur Veränderung der Abstrahlungsrichtung vorgesehen sind und die relative Position der Sendeantennen (A1..n) zueinander in der Sendeeinrichtung (BS, MS) derart festgelegt wird, daß in vorbestimmten Bereichen innerhalb eines Funkbereiches der Sendeeinrichtung (BS, MS) die Freiraum-Sendesignale der verschiedenen Abstrahlungsrichtungen eine Mindest-Dekorrelation aufweisen.

7. Sendeeinrichtung (BS,MS) nach einem der Ansprüche 1 bis 6, wobei zusätzliche die Möglichkeit der Frequenzveränderung vorgesehen ist.

## Claims

1. Transmitting device (BS, MS) for a mobile radio network with a transmission signal source (SQ) and a transmitting antenna (A1) to transmit information sequences, which are divided according to a specified time protocol and are radiated in at least two radio signals of a specific transmission frequency, which contain at least two different pieces of information, with a time-controlled changeover switch (US) which switches the radiation characteristic of the transmitting device (BS, MS), so that without changing the transmission frequency the sequence of radio signals of a traffic relationship is decorrelated, with a time protocol of the time-controlled changeover switch (US) being synchronised with the time protocol of the message transmission of the transmitting device (BS, MS), whereby the changeover of the radiation characteristic can be carried out by using one transmission antenna (A1), characterised in that the radiation direction can be changed.

2. Transmitting device (BS, MS) in accordance with claim 1, characterised in that the radio signals are formed and radiated in the time slot multiplex-operated transmitting device (BS, MS) and the changeover switch (US) is controlled by a timer (ZG), so that the changeover switch (US) switches over the direction of radiation precisely in line with time slots in accordance with a given sequence.

3. Transmitting device (BS, MS) in accordance with claims 1 or 2, characterised in that the transmission antenna (Al) is designed in such a way that its radiation can take place in different polarisation levels, and that the changeover switch (US) feeds the transmission signals to the transmitting antenna (A1) in such a way that a changeover takes place between the polarisation levels by suitable feeding of the transmitting antenna (A1).

4. Transmitting device (BS, MS) in accordance with one of claims 1 to 3, characterised in that the transmitting antenna (A1) is formed as a phase-controlled group antenna and the changeover switch (US) changes over or controls the phase control between at least two different radiation directions.

5. Transmitting device (BS, MS) in accordance with one of claims 1 to 4, whereby the transmitting device (BS, MS) is formed as a base station (BS) or mobile station (MS) in a GSM or GSM-similar mobile radio system and whereby the changeover switch (US) switches the direction of radiation in accordance with the GSM with each time slot, each frame or each macroframe.

6. Transmitting device (BS, MS) in accordance with one of claims 1 to 5, whereby several transmitting antennas (A1..n) are provided to change the direction of radiation and the relative position of the transmitting antennas (A1..n) in the transmitting device (BS, MS) is stipulated in such a way that the free-space transmitting signals of the various directions of radiation have a minimum decorrelation in predetermined areas within a radio area of the transmitting device (BS, MS).

7. Transmitting device (BS, MS) in accordance with one of claims 1 to 6, whereby the possibility of frequency changing is also provided.

## Revendications

1. Installation d'émission (BS, MS) pour un réseau radio mobile, comportant une source de signaux d'émission (SQ) et une antenne émettrice (A1) pour transmettre des séquences d'information, qui sont divisées suivant un protocole temporel prédéfini, et qui sont rayonnées en au moins deux signaux radio d'une fréquence déterminée contenant des informations différentes, comportant un commutateur (US) à commande temporelle, qui commute la caractéristique de rayonnement de l'installation d'émission (BS, MS) de telle façon que la décorrélation entre les signaux radios successifs d'une relation de trafic se fasse sans modification de la fréquence d'émission, un protocole temporel du commutateur (US), à commande temporelle, étant synchronisé avec le protocole temporel de la transmission d'information de l'installation d'émission (BS, MS),
la commutation de la caractéristique de rayonnement pouvant être exécutée en utilisant une antenne d'émission (A1),
caractérisée en ce que la direction de rayonnement est modifiable.

2. Installation d'émission (BS, MS) suivant la revendication 1,
caractérisée en ce que les signaux radio sont produits et émis dans l'installation d'émission (BS, MS) en multiplexage de positions temporelles,
et en ce que le commutateur (US) est commandé par une horloge (ZG) de telle façon que le commutateur (US) commute la direction de rayonnement en suivant une séquence prédéfinie et en respectant la position temporelle.

3. Installation d'émission (BS, MS) suivant la revendication 1 ou la revendication 2, caractérisée en ce que l'antenne d'émission (A1) est réalisée de telle façon que son rayonnement puisse se faire dans plans de polarisation différents, et en ce que le commutateur (US) envoie à l'antenne d'émission (A1) les signaux d'émission de telle façon que la commutation se fasse entre les plans de polarisation par une alimentation appropriée de l'antenne d'émission (A1).

4. Installation d'émission (BS, MS) suivant l'une des revendications 1 à 3, caractérisée en ce que l'antenne d'émission (A1) est réalisée sous la forme d' une antenne multiple commandée en phase et en ce que le commutateur (US) commute ou commande la commande en phase entre au moins deux directions différentes de rayonnement.

5. Installation d'émission (BS, MS) suivant l'une des revendications 1 à 4, l'installation d'émission (BS, MS) étant réalisée sous la forme d'une station de base (BS) ou d'une station mobile (MS) dans un système radio mobile GSM ou analogue au GSM, et le commutateur (US) commutant la direction de rayonnement avec chaque position temporelle, chaque trame ou chaque macrotrame.

6. Installation d'émission (BS, MS) suivant l'une des revendications 1 à 5, plusieurs antennes d'émission (A1,...An) étant prévues pour modifier la direction de rayonnement, et la position relative des antennes d'émission (A1,...An) les unes par rapport aux autres étant fixée, dans l'installation d'émission (BS, MS), de telle façon que, dans des zones prédéfinies à l'intérieur d'une portée d'émission radio de l'installation d'émission (BS, MS), les signaux d'émission en espace libre des différentes directions d'émission présentent une décorrélation minimale.

7. Installation d'émission (BS, MS) suivant l'une des revendications 1 à 6, pour laquelle il est prévu, en plus, la possibilité de modifier la fréquence.
